# EUROPEAN PATENT APPLICATION

(11) **EP 2 868 292 A1**
(43) Date of publication of application: **06.05.2015**
(21) Application number: 13190745.3
(22) Date of filing: 29.10.2013
(51) Int. Cl.: A61C 17/02, A61C 3/025

(54) **Applicator for dispensing materials through a water-jet device**

(71) Applicant: Cohen Tanugi, Bruni Binyamin, 51387 Bnei-Brak (IL)
(72) Inventor: Cohen Tanugi, Bruni Binyamin, 51387 Bnei-Brak (IL)
(74) Representative: EP&C

(57) **Abstract**

An applicator for dispensing materials therethrough when using a water jet device, which includes: a dispensing member comprising a cannular member having an inner cavity therein, having a recess formed therein, where cannular member comprises openings thereover; and a cover covering the cannular member such as to enclose the recess to form a space between the cover and the cannular member in which the material is located. This space is configured for containing a material therein to allow dispending the contained material through the plurality of openings into the cavity of the cannular member to enable dispensing allotted portions of the material when a respective water jet is directed towards a respective jet tip of the water jet device. The applicator can be removable from the water jet device to allow replacing or refilling thereof and to allow using the water jet device without the applicator.

## Description

### FIELD OF THE INVENTION

The present invention generally relates to gel dispensing apparatuses and more particularly to dispensing apparatuses for water jet devices.

### BACKGROUND OF THE INVENTION

Water jet techniques are used for a variety of purposes and a variety of devices such as water jet cutters enabling cutting through rigid materials such as stone or metal or dental water jet devices for dental cleansing.

Dental water jet devices also called oral irrigators are designed for applying water jets over the teeth and gum-line to remove food debris, stains and bacteria (plaque) from the tooth as well as from hard-to-reach areas in the oral cavity such as between dense teeth and between a tooth and its surrounding gums. Oral irrigators are also used to irritate the gums to further improve oral hygiene, tooth and gingival health. The type of the jet (continuous or pulsed) and the jet pressure and thickness determine its efficiency. When using water-jet devices it is often necessary to apply pharmaceutical or cleansing materials over the tooth and gum-line to enhance the operation of the water jet. Using dental water jet devices was proven to improve or even eradicate many dental problems and diseases such as gingivitis which often causes gums to bleed and/or recede, caries and others. Oral irrigators are extremely effective for subjects wearing orthodontic installations such as orthodontic braces.

Oral irrigators often include a spout portion connected to a water pipe, where the diameter of the outlet rim of the spout is significantly small to increase the jet pressure of the water when exiting the spout. The device can connect to a portal and fillable water container or to a water faucet, depending on the product abilities and purpose.

### SUMMARY OF THE INVENTION

According to some embodiments of the present invention, there is provided a water jet device for enabling dispensing materials when using thereof, where the water jet device comprises: (i) a body comprising a jet tip including an outlet portion through which fluids can exit and a base portion and a connector for connecting to a water pipe for receiving water therethrough, the jet tip and connector having an inner cavity therein through which water jet can pass; and (ii) an applicator, which connects to said inner cavity through said body, said applicator is configured for economically dispensing of a material when the water jet is operated.

According to some embodiments of the present invention, there is provided an applicator for dispensing materials therethrough when using a water jet device, wherein the applicator comprises a dispensing member comprising a cannular member creating an inner cavity therein, and at least one rim connected to the cannular member and protruding therefrom for creating a space defined by a recess created thereby over an outer surface of the cannular member. According to these embodiments, the cannular member comprises a plurality of openings thereover, wherein the recess is configured to allow forcing a material that is located therein through the plurality of openings into the cavity of the cannular member to enable dispensing allotted portions of the material when a respective water jet is directed towards a respective jet tip of the water jet device during the water jet flow through the cavity.

Optionally, the dispensing member is walled by an inner wall of the respective jet tip, creating a space between the wall and the cannular member defined by the recess in which the material is located, wherein once the water jet is applied through the applicator cavity when directed towards the jet tip to exit the water jet device carry allotted portions of the material inserted to the water jet from the space and into the cavity.

According to some embodiments, the applicator further includes a cover walling the cannular member in such a manner that creates a space between the wall and the cannular member in which the material is located, wherein once the water jet is applied through the applicator cavity when directed through the first rim towards the jet tip to exit the water jet device carry allotted portions of the material inserted to the water jet from the space and into the cavity. The wall may be made from a transparent rigid material to allow the user to see the remaining gel in the space therein.

The applicator is optionally configured to be installed between the jet tip of the water jet device and a water pipe connected thereto, for allowing the water to pass therethrough before exiting the jet tip. The applicator may further comprise a connector and an adaptor, wherein the connector allows removably connecting a first edge of the applicator to the jet tip and the adaptor allows connecting a second opposite edge of the applicator to the water pipe.

The applicator may further comprise a removable gel applying member including an elongated member having a plurality of openings thereover, wherein a frontal edge thereof is sealed, the elongated member is configured to be inserted through the applicator's inner cavity, the gel applying member is further configured to connect to a pressable gel container for enabling to insert the gel into the applicator through the elongated member, wherein the sealed edge also seals the first rime of the applicator and thereby forces the pressed gel only through the openings of both the elongated member and the cannular member.

According to some embodiments, the material dispensed by the applicator is at least one of: medical material, cosmetic material, cleansing material.

According to some embodiments, the material dispensed by the applicator is in the form of gel, paste, or powder.

According to some embodiments of the invention, there is provided a water jet device for enabling dispensing materials when using thereof, wherein the water jet device comprises: (i) a jet tip including an outlet portion through which fluids can exit and a base portion; (ii) a connector for connecting to a water pipe for receiving water therethrough; and (iii) an applicator for economically dispensing of a material therethrough when the water jet is operated, the applicator connects to the jet tip at one end thereof and to the water tube at the other end thereof. According to these embodiments, the applicator comprises a dispensing member comprising a cannular member creating an inner cavity therein, and at least one rim connected to the cannular member and protruding therefrom for creating a space defined by a recess created thereby over an outer surface of the cannular member, the cannular member comprises a plurality of openings thereover, wherein the recess is configured to allow forcing a material that is located within the recess through the plurality of openings into the cavity of the cannular member to enable dispensing allotted portions of the material when a respective water jet is directed towards a respective jet tip of the water jet device during the water jet flow through the cavity.

Optionally, the dispensing member is walled by an inner wall of the respective water jet device jet tip, creating a space between the wall and the cannular member in which the material is located, wherein once the water jet is applied through the applicator cavity when directed towards the jet tip to exit the water jet device it carries allotted portions of the gel inserted to the water jet from the space and into the cavity

The water jet device may be a dental water jet device functioning as an improved oral irrigator device, allowing applying dental materials.

The water jet device may optionally further include a valve installed at the jet tip to allow users to en and close the water jet therethrough.

According to some embodiments, the base member is a narrowing tube shape, where its inner wall enables walling the applicator in such a manner that creates a space between the cannular member and the wall into which the gel is forced through the plurality of openings, wherein once the water jet is applied through the applicator cavity when directed through the first rim towards the jet tip to exit the water j et device carry allotted portions of the gel inserted to the water jet from the space and into the cavity. The inner diameter of an edge rim of the base member may be configured to connect to the adaptor is substantially larger than the diameter of the outlet section of the jet tip.

According to some embodiments, the outlet section of the jet tip is curved at the edge.

Optionally, the applicator further comprises a wall covering the cannular member in such a manner that creates a space between the wall and the cannular member into which the gel is forced through the plurality of openings, wherein once the water jet is applied through the applicator cavity when directed through the first rim towards the jet tip to exit the water jet device carry allotted portions of the material inserted to the water jet from the space and into the cavity.

The water jet device optionally further comprises a handle designed for a user to grab on thereto when applying a water jet, the handle comprises a valve mechanism for enabling the respective user to control water flow while holding the handle.

The material dispensed by the applicator may include at least one of: medical material, cleansing material, cosmetic material, and may be in the form of gel, paste, cream or powder.

According to some embodiments of the invention, there is provided a water jet device for enabling dispensing materials when using thereof, wherein the water jet device comprises: (i) a body comprising a jet tip including an outlet portion through which fluids can exit and a base portion and a connector for connecting to a water pipe for receiving water therethrough, the jet tip and connector having an inner cavity therein through which water jet can pass; and (ii) an applicator for economically dispensing of a material when the water jet is operated, the applicator comprises a container for containing a material for dispensing thereof and an edge configured for connecting to the water jet body, wherein the applicator is externally connected to the water jet device body and connects to the inner cavity thereof to allow the jet of water passing therethrough to enter the container for dispensing allocated portion of the material therefrom into the water jet whenever the water jet device is operated.

The container may be made from a flexible material.

Optionally, the applicator connects to the jet tip of the body.

According to some embodiments, the body further comprises a handle portion, wherein the applicator connects to the body at the handle portion thereof.

According to other embodiments, the applicator removably connects to the body for allowing replacing and/or refilling thereof.

The water jet device may optionally comprise a valve for allowing a user to control operation of the water jet device by controlling water flow therethrough.

According to yet other aspects of the present invention, there is provided an applicator for dispensing materials therethrough when using a water jet device, that includes: (a) a dispensing member comprising a cannular member having an inner cavity therein, and at least one rim connected to the cannular member and protruding therefrom for creating a space defined by a recess created thereby over an outer surface of the cannular member, where cannular member comprises a plurality of openings thereover; and (b) a cover covering the cannular member in such a manner that it encloses the recess to form the space between the cover and the cannular member in which the material is located, wherein this space is configured for containing a material therein to allow dispending the contained material through the plurality of openings into the cavity of the cannular member to enable dispensing allotted portions of the material when a respective water jet is directed towards a respective jet tip of the water jet device during the water jet flow through the cavity, and wherein the applicator is configured for removably connecting to the water jet device for allowing replacing and/or refilling thereof and for allowing using the water jet device without the applicator.

### BRIEF DESCRIPTION OF the DRAWINGS

**Fig. 1** is an exploded view, schematically showing a dental water jet device including a dispensing apparatus embedded therein, according to some embodiments of the present invention.

**Fig. 2** is an exploded view, schematically showing the dispensing apparatus of Fig. 1, according to some embodiments of the present invention.

**Fig. 3** is an exploded view, schematically showing a dental water jet device including a dispensing apparatus embedded therein, according to other embodiments of the present invention.

**Fig. 4** is a cross sectional view of the dental water jet device of **Fig. 3** having the applicator installed therein, according to some embodiments of the present invention.

**Fig. 5** is an exploded view schematically illustrating a water jet device, according to other embodiments of the present invention.

**Fig. 6A** is a cross sectional view schematically illustrating a jet tip of a water jet device having an applicator connected thereto, according to yet another embodiment the present invention.

**Fig. 6B** shows the jet tip and the applicator of **Fig. 6A****.**

### DETAILED DESCRIPTION OF THE INVENTION

In the following detailed description of various embodiments, reference is made to the accompanying drawings that form a part thereof, and in which are shown by way of illustration specific embodiments in which the invention may be practiced. It is understood that other embodiments may be utilized and structural changes may be made without departing from the scope of the present invention.

The present invention, in some embodiments thereof, provides an applicator that allows dispensing material such as gel, paste, ointment, powder and the like therefrom through a water jet device in a moderated economical manner for dispensing allotted portions of the material during each water jet irrigation-session and during multiple utilizations thereof. The applicator, according to some embodiments, allows dispensing the material during the operation of the water jet device in an efficient manner both economically as well as medically and/or hygienically, by allowing both prolonging the utilization time of a predefined gel portion as well as enabling a substantially continuous emission of the material throughout each irrigation-session.

According to some embodiments of the present invention, the applicator is designed to dispense dental material such as Chlorhexidine gel, Xylitol, toothpaste, or any other dental material whether liquid gel or powder, through a dental water j et device (oral irrigator) for medical/cleansing/cosmetic purposes. Since the gel is dispensed during the dispensing of the water jet the dispensed dental material can be directed along with the water jet to a desired location such as between the tooth and its surrounding gum tissue to enhance the effect of the water jet as well as the effect of the dental material.

According to additional or alternative embodiments of the present invention, there is provided a water jet device including an applicator that is installed therein, where the applicator allows dispensing material therefrom into the water jet of the device in a moderated economical manner for dispensing allotted portions of the gel during each water jet irrigation-session and during multiple utilizations thereof.

The term "irrigation-session" refers to each period in which the water jet device is utilized where a jet of water is outputted from the water jet device.

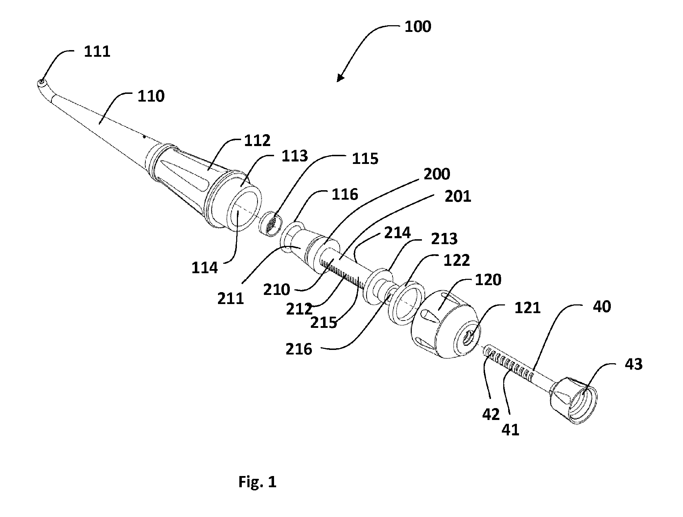

Reference is now made to **Figures 1-2****,** schematically illustrating a dental applicator **200** for dispensing of dental material such as dental gel or paste through the operation of a dental water jet device **100** (also referred to as oral irrigator **100)** in which it is configured to be installed, according to some embodiments of the present invention. According to these embodiments, the adaptor **200** can be marketed as a part of the water jet device **100** or as a separate part that can be installed in the water jet device **100.** According to some embodiments, the water jet device **100** is a dental oral irrigator enabling to output pulsed and/or continuous water jets through each irrigation-session.

As illustrated in **Fig. 1****,** the water jet device **100** includes a jet tip **110** that has a narrowing conical structure and an adaptor **120** for connecting the jet tip **110** to a water pipe (not shown) which can connect to a water container and/or to a water faucet for inserting water therein. The conical shape of the jet tip **110** allows increasing the jet pressure to be outputted through an outlet section **111** of the jet tip **110** since the an inlet section **113** of the jet tip **110** connecting to the adaptor **120** has an aperture diameter that is substantially larger than the diameter of the outlet section **111.** The inlet section **113** of the jet tip **110** includes a base section **112** configured to receive therein the applicator **200** or a part thereof.

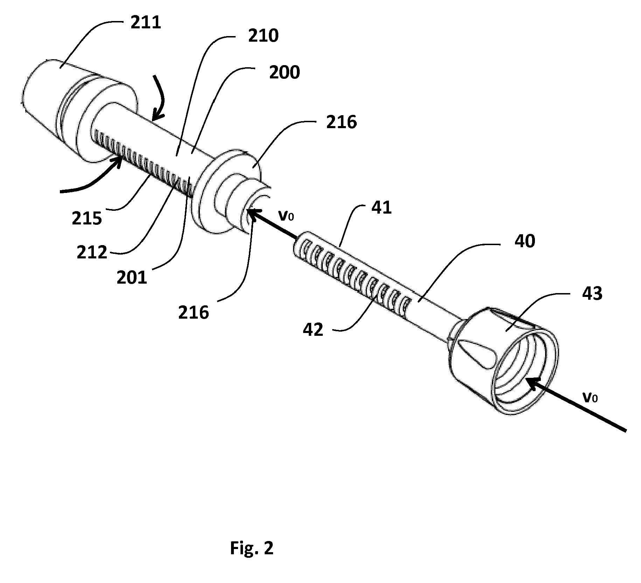

According to some embodiments of the present invention, as illustrated in **Figures 1-2****,** the applicator **200** includes a dispensing member **210** having a cannular member **215** having one or more array of openings **212,** where the cannular member **215** creates an inner cavity therein, a first rim **211** and a second rim **213** that protrude from an outer surface of the cannular member **215** forming a recess **201** of this outer surface, for creating a space defined by the recess **201** created to allow forcing a material that is located within the recess **201** to be forced through the of openings **212** into the cavity **216** of the cannular member **215** to enable dispensing allotted portions of the material through the cavity **216** during the water jet flow through a water trajectory **"V₀",** defining the direction of the water jet when passing through the device **100** (see **Fig. 2****)** and cannular member **215** inner cavity **216.** The first rim **211** is configured to face and be inserted through the inlet section **113** of the jet tip **110** and the second rim **213** is configured to face and connect to the adaptor **120.** In this way the applicator **200** can be installed in the water jet device **100** by inserting it into the cylindrical cavity of the base section **112,** which is configured to encapsulate the applicator **200** therein.

According to some embodiments of the present invention, as illustrated in **Figures 1-2****,** once the water jet is applied, it flows through the cavity **216** of the applicator **200** and some of the water is forced out of the openings **212** towards the space (recess **201)** where the material is located between the outer walls of the cannular member **215** and the inner walls **114** of the jet tip **110.** The exiting water (that exited through the openings **212)** mix with some of the material (e.g. gel) located in this recess **201** that is closed by the inner walls **114** of the jet tip **110** and takes a portion of the material (e.g. gel/paste) back into the cavity **216** of the cannular member **215** into the water stream running therethrough, thereby allowing dispensing water mixed with portions of the material through the jet tip **110** for applying the material along with the pressured water jet over the oral area to which it is directed (e.g. the gum-line in case of dental materials or the tooth itself for cosmetic materials such as blotching materials etc.). this allows dispensing the water jet along with the material for improving the dental/cleansing/cosmetic operation of the material over the oral area as well as allows dispensing the material in an allotted and economic manner.

The applicator **200** first rim **211** is slightly coned enabling fitting a designated water filter **115** to connect thereto through an O-ring **116.** The cannular member **215** of the gel dispensing member **210** has a smaller diameter then that of its rims **211** and **213** to allow this section to be walled by the inner wall **114** of the base section **112** creating a space therebetween. In this configuration, when the material dispensing member **210** is inserted through the jet tip **110** the user may be able to force material through the second rim **213** to the space between the walls **114** of the base section **112** and the cannular member **215** by, for example using a removable applying member **40.** To allow the user to easily fill the space between the applicator **200** and the inner wall **114** of the jet tip **110.** The applying member **40** may include an elongated member **41** having at least one array of openings **42** positioned to fit the applicator's **200** array(s) of openings **212,** where the elongated member **41** is sealed at its distal edge that is configured to be inserted into the inner cavity **216** of the applicator **200;** and a connector **43** for connecting the applying member **40** to a pressable container such as a tube container of a dental cleansing material materials such as Chlorhexidine gel, tooth gel or paste and the like. Once the applying member **40** is connected to the tube container (e.g. through screwing threaded at its edge suitable for a standard male screw thread of typical material tube containers) the user can press the tube to force the material into the inner cavity **216** of the applicator **200** through the elongated member's **41** openings **42.** The material will further be forced from the inner cavity **216** to the space between the jet tip **110** inner wall **114** and the cannular member **215** recess **201** surface through its openings **212.** Once this space is filled (can be felt by the back pressure applied upon the tube container when the user continues pressing thereof), the applying member **40** can be removed and to connect the water jet device **100** to water supply through a water pipe (e.g. to a water container, which is a part of the water jet device or to a water faucet).

As illustrated in **Fig. 1****,** the connector **120** has a back rim 121 that is of a diameter that is compatible to the outer diameter of the elongated member **41 -** both can be adapted to a water pipe standard diameter (e.g. standard dimensions thereof). The connector **120** can connect to the rear second rim **213** of the material dispensing member **210** through an O-ring **122.**

According to these embodiments, once the material is inside the space between the inner wall **114** and the cannular member **215** and once the water jet device is assembled, connected to the water supply and operated, the water jet goes along the **V₀** trajectory through the inner cavity **216** of the cannular member **215** towards the outlet section **111** of the jet tip **110,** some of the material returns through the openings **212** to the cavity **216** and is carried by the water jet outwardly towards the area the user is directing the outlet section **111.** The space dimensions and volume may be designed to allow encapsulating enough material therein to allow using the amount of material filling this space for multiple irrigation session. The volume of this space (determined by the diameter and length of the inlet section **113** and base section **112** and the diameter and length of the cannular member **215)** as well as the number, locations and size of the openings **212** should be designed/configured according to the type of water jet device **100** (e.g. dental or other and/or the jet pressure and type i.e. pulsed or continuous), the material types that it should dispense and their viscosity level, and the like, to allow optimal economical and efficient material dispensing.

For example, in case of an oral irrigator water jet device **100** the user is recommended to direct the outlet **111** to the gum-line area and therefore this method and device **100** allows inserting reasonable allotted portions of material through the water jet pressure through the gum-line into areas between the teeth and gums thereby allowing the material to adhere to the tooth in gum-covered areas by using the jet force that slightly separates the gums from the tooth in these area. This dramatically improves oral hygiene and can even help preventing surgery in some case since the material is actually forced to adhere to tooth surfaces otherwise inaccessible. If the material was merely rubbed over the gum-line before using the water jet rather than applied during the applying of the water jet as a part of the jet itself, most of the material was washed away by the water material wasting a major percentage thereof enabling only a very small portion to actually adhere to the covered teeth surfaces underneath the gum-line. The current configuration, method and applicator **200** allow much greater quantities of material to adhere to the covered teeth surfaces while using much less material in each irrigation-session.

As illustrated in **Fig. 1****,** the jet tip **110** edge may be bent so that the outlet section **111** is angular to the rest of the jet tip **110** body to allow easy access to oral areas in case of a dental water jet device **100** or to any other area the water jet should reach. In this case the water pipe can be flexible to allow the user to easily move and twist the jet tip **110** to access different locations in his/her oral cavity.

According to some embodiments of the present invention, the water jet device may further include a control button or valve conveniently located over the jet tip 110 for enabling the user to easily open and close water flow thereto.

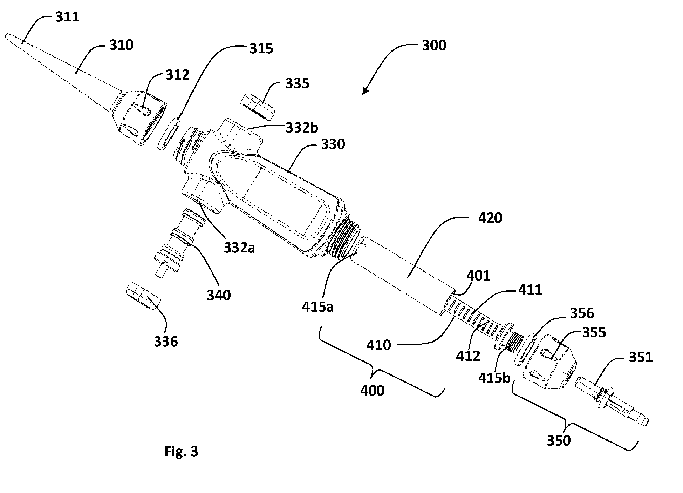

Reference is now made to **Figures 3-4****,** schematically illustrating a dental water jet device **300** with a replaceable (dispensable) and/or refillable applicator **400,** according to other embodiments of the present invention. In these embodiments, the water jet device **300** includes: (i) a straight (unbent) jet tip **310** including an outlet section **311** and a connector inlet section **312;** (ii) a handle **330** with a valve mechanism **340;** (iii) the dispensable applicator **400;** and (iv) a connector **350** for connecting the water jet device **300** to water supply (such as a water container or a water faucet) via a water pipe (Not Shown).

As illustrated in **Figures 3-4****,** the connector **350** includes an adaptor **320** that allows connecting to the handle **330** (e.g. through screw based connection and through a water sealing O-ring **322)** and to the second rim **415** of the applicator **400** at one end, and to a water pipe (Not Shown) at its other end through a pipe connecting adaptor **351.**

According to some embodiments of the present invention, as illustrated in **Fig. 3****,** the valve mechanism **340** located at the handle **330** of the water jet device **300,** is designed to allow a user to easily open and close the water jet by including a valve therein that can be open and closed via a press button **336.** In this example, to open the water jet the user is required to press the elongated valve mechanism **340** button **336** connected to a first side **332a** of the body of the handle **330,** which ultimately opens a sealer valve therein (e.g. via a spring **341** based release mechanism) to allow water flow and release the pressure or even completely let go of the valve mechanism **340** portion to close the water jet, whereby the sealer valve simply returns to its place (closed position in which water is sealed from entering the water jet device **300)** through the spring **341** release in which it seals water passage towards the jet tip **310.** The valve mechanism **340** may further allow controlling the water flow and not just open and close thereof by controlling an aperture of an opening of the sealer valve therein by controlling pressure applied to compress a coiled spring connected thereto, for example. The handle **330** other second side **332b** may be sealed as well by a cover **335.**

The applicator **400** includes (i) a dispensing member **410** including a dispensing portion **411** having multiple openings **412,** a first rime portion **415a** and a second rim portion **415b;** and (ii) a cover **420.** According to some embodiments, as illustrated in **Fig. 3****,** the cover **420** envelopes and walls the dispensing portion **411** of the dispensing member **410** such that it seals it while creating a space **401** between the cover's **420** wall and the cannular member **411** into which the applicator can be forced through the plurality of opening when filling/refilling the applicator **400.** According to some embodiments, as illustrated in **Fig. 3****,** the cover **420** is made from transparent rigid material to allow a user to see the remaining applicator inside the applicator's space **401** to know if the applicator **400** should be replaced or refilled.

According to some embodiments of the present invention, the applicator **400** may be filled having the space **401** between its transparent cover **420** and dispensing member **410** already filled with applicator, while the openings of the rims **415a** and **415b** of the dispensing member **410** are sealed by removable sealers to allow the user to install the applicator **400** in the water jet device **300** by removing the sealers and inserting the applicator **400** into the handle **330** of the water jet device **300** and then connecting the handle **330** to the connector **350** for closing the water jet device **300.** Since the cover **420** is transparent, the user can see when the applicator **400** needs refilling or replacing. In cases in which the applicators are marketed as dispensable applicators - the removable sealers may be designed so as not to allow resealing the rims **415a** and/or **415b** of the dispensing member **410.** In other cases the applicator **400** includes sealers that can be reused to seal the rims **415a** and **415b** to refill the applicator **400** by using a material applying member that is similar in concept to the one described in relation to **Figures 1-2****,** using a container tube connected thereto to allow filling the applicator **400** by squeezing/pressing the container tube to force the material therefrom into a cavity **416** of the dispensing member **410** and therefore to force the material to the space **401** between the dispensing member **410** and the cover **420** through the openings **412** of the dispensing member **410.**

Due to the structure of the applicator **410,** once the water jet is applied through the applicator cavity **416** when directed through the first rim **415a** towards the jet tip **310** outlet portion **311** to exit the water jet device **300** it carries allotted portions of the material that enter the cavity **416** and join the water j et to allow the material portion to be applied over the oral area along with the water jet flowing through this cavity **416.**

The water jet devices such as **100** and **300** described in respect to some specific embodiments referring to oral irrigators can simply be used to describe other types of water jet devices using other types of materials depending on the purpose of the water jet device and/or its design.

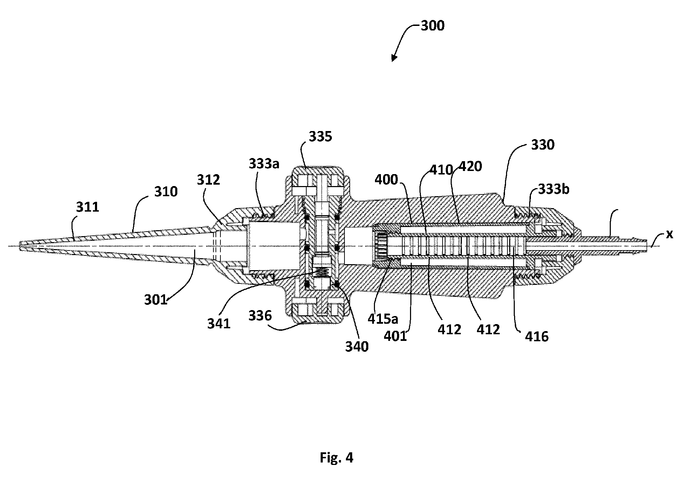

The cross sectional view of **Fig. 4** shows how the water jet is directed through an inner cavity **301** of the water jet device **300** and through the cavity **416** of the applicator **400** substantially along a main axis "x" of the device **300** and applicator **400.** portions of the of the water jet directed through axis "x" enter the space **401** between the outer surface of the dispensing portion **411** and the inner wall of the cover **420** where the material (e.g. dental gel material) is located, through the openings **412** of the applicator's **400** dispensing portion **411 .** The water then return to the inner cavity **416** while taking a portion of this material there with while continuing towards the opening portion **311** of the water jet device **300** for ejecting therefrom. This way portions of the material are being dispensed from the water jet device **300** and applicator **400** installed therein whenever the water jet is applied through the device **300.**

According to some embodiments of the present invention, the water jet device may also include a control unit that can electronically control mechanical and/or other functions of the water jet device and/or the applicator. For example, to control the valve mechanism or to notify the user (e.g. through visual and/or auditory alarms) that the material in the applicator is about to run out. To allow such indication, some mechanism that senses the amount of material in the space between the dispensing member and the wall surrounding it creating the space for the material to be stored in (either the inner wall of the jet base section or of the transparent cover of the applicator itself, depending on the specific embodiment) such as an optical sensor. Once the sensor identifies that the applicator is "empty" it operates a visual/auditory alarm signaling to the user that the applicator should be refilled/replaced.

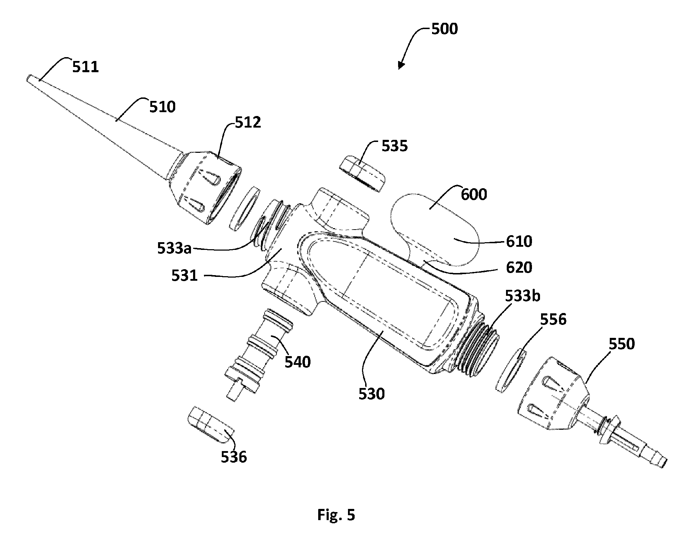

Reference is now made to **Fig. 5****,** schematically illustrating a water jet device **500** with an external applicator **600,** according to other embodiments of the present invention. In these embodiments, the water jet device **500** includes: (1) a body having (i) a jet tip **510** having an outlet section **511** and a connector inlet section **512;** (ii) a handle **530** with a valve mechanism **540;** (iii) and (iv) a connector **550** for connecting the water jet device **500** to water supply (such as a water container or a water faucet) via a water pipe (Not Shown); and (2) the applicator **600.** Other components of the water jet device **500** are similarly configured to equivalent components of the water jet devices **300** and **100** as described above; such as a cover **535,** a press button **536** of the valve **540** and a connector **550** for connecting the water jet device **500** to water supply via an O-ring **556.**

According to some embodiments of the invention, the applicator **600** includes an external container **610** having a funnel shaped edge **620** for connecting to an inner cavity tube of the water jet device **500** through which the water jet passes. The container **610** is filled with material such as a dental cleansing gel allowing allocated dispensing of the material into the water jet. The container **610** externally connects to the water jet device **500** body through an opening in the water jet device **500** configured for connecting to the edge **620** thereof, for allowing easy replacement and/or refilling thereof.

The narrowing end of the funnel shaped edge **620** of the container **610** connecting into the water jet creates a suction pressure that draws water from the water jet into the container **610.** The drawn water return into the jet while bringing some of the material in the container **610** into the water jet therewith at each operation of the water jet device **500** allowing thereby to dispense allocated portions of the contained material upon each utilization of the water jet device **500.**

According to some embodiments, the applicator **600** is removably connected to the water jet device **500** body for allowing replacing and/or refilling thereof.

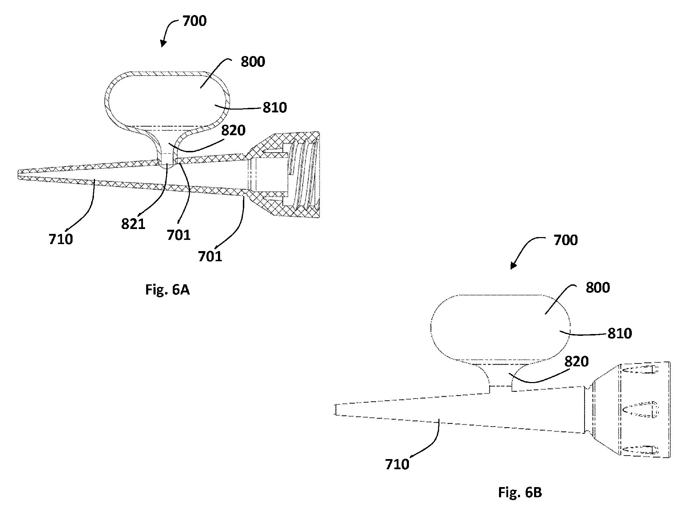

**Figures 6A** and **6B** illustrate another embodiment of a water jet device **700** having the same configuration of an applicator **800** having a container 810 and a narrowing edge **820** connected to the jet tip **710** of the device **700** for allowing dispensing allocated portion of a material contained therein into the water jet through an inner cavity through which the water jet passes, according to other embodiments of the invention.

The funnel shaped edge **820** of the applicator **800** includes an opening **821** which connects to a designated opening **702 at the water jet device 700** (in this case the opening **702** is in the jet tip **710).** The applicator **800** may include a connecting edge **820** configured for fastening to the water jet device **700** in a sealed manner.

Optionally, the container **820/620** is made from a flexible material allowing creating vacuum or partial vacuum therein once the water jet device **700/500** is operated.

Many alterations and modifications may be made by those having ordinary skill in the art without departing from the spirit and scope of the invention. Therefore, it must be understood that the illustrated embodiment has been set forth only for the purposes of example and that it should not be taken as limiting the invention as defined by the following invention and its various embodiments and/or by the following claims. For example, notwithstanding the fact that the elements of a claim are set forth below in a certain combination, it must be expressly understood that the invention includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the invention is explicitly contemplated as within the scope of the invention.

The words used in this specification to describe the invention and its various embodiments are to be understood not only in the sense of their commonly defined meanings, but to include by special definition in this specification structure, material or acts beyond the scope of the commonly defined meanings. Thus if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a sub-combination or variation of a sub-combination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptually equivalent, what can be obviously substituted and also what essentially incorporates the essential idea of the invention.

Although the invention has been described in detail, nevertheless changes and modifications, which do not depart from the teachings of the present invention, will be evident to those skilled in the art. Such changes and modifications are deemed to come within the purview of the present invention and the appended claims.

## Claims

1. An applicator (400) for dispensing materials therethrough when using a water jet device (300), said applicator (400) comprising:
a) a dispensing member (410) comprising a cannular member (411) having an inner cavity (416) therein, and at least one rim (415a) connected to said cannular member (411) and protruding therefrom forming a recess thereby over an outer surface of said cannular member (411), said cannular member (411) comprises a plurality of openings (412) thereover; and
b) a cover (420) covering said cannular member (411) in such a manner that it encloses the recess to form a space (401) between said cover (420) and said cannular member (411) in which the material is located, wherein said space (401) is configured for containing a material therein to allow dispending the contained material through said plurality of openings (412) into said cavity (416) of said cannular member (411) to enable dispensing allotted portions of the material when a respective water jet is directed towards a respective jet tip (310) of said water jet device (300) during the water jet flow through said cavity (416), and
wherein said applicator (400) is configured for removably connecting to the water jet device (300) for allowing replacing and/or refilling thereof and for allowing using said water jet device (300) without said applicator (400).

2. The applicator (400) according to claim 1 is configured to be installed between the jet tip (310) of said water jet device (300) and a water pipe for allowing the water to pass therethrough before exiting said jet tip.

3. The applicator (400) according to claim 3 is configured to connect to said water jet device (300) through a connector and an adaptor thereof, said connector allows removably connecting a first edge of said applicator to said jet tip and said adaptor allows connecting a second opposite edge of said applicator to said water pipe.

4. The applicator (400) according to claim 1 further comprising a removable gel applying member (40) including an elongated member (41) having a plurality of openings (42) thereover, wherein a frontal edge thereof is sealed, said elongated member (41) is configured to be inserted through the applicator's inner cavity (416), said gel applying member is further configured to connect to a pressable gel container for enabling to insert the gel into said applicator through said elongated member, wherein said sealed edge also seals said first rime of the applicator and thereby forces the pressed gel only through the openings of both said elongated member and said cannular member.

5. The applicator according to claim 1-5, wherein said material is at least one of: medical material, cosmetic material, cleansing material.

6. The applicator according to claim 1-6, wherein said material is in the form of gel, paste, or powder.

7. A water jet device (300) for enabling dispensing materials when using thereof, said water jet device (300) comprising:
• a jet tip (310) including an outlet section (311) through which fluids can exit and a base portion (330);
• a connector (350) for connecting to a water pipe for receiving water therethrough; and
• an applicator (400) for economically dispensing of a material therethrough when the water jet is operated, said applicator (400) connects to said jet tip (310) at one end thereof and to a water tube at the other end thereof,
wherein said applicator (400)comprises:
a) a dispensing member (410) comprising a cannular member (411) having an inner cavity (416) therein, and at least one rim (415a) connected to said cannular member (411) and protruding therefrom forming a recess thereby over an outer surface of said cannular member (411), said cannular member (411) comprises a plurality of openings (412) thereover; and
b) a cover (420) covering said cannular member (411) in such a manner that it encloses the recess to form a space (401) between said cover (420) and said cannular member (411) in which the material is located,
wherein said space (401) is configured for containing a material therein to allow dispending the contained material through said plurality of openings (412) into said cavity (416) of said cannular member (411) to enable dispensing allotted portions of the material when a respective water jet is directed towards a respective jet tip (310) of said water jet device (300) during the water jet flow through said cavity (416), and
wherein said applicator (400) is configured for removably connecting to the water jet device (300) for allowing replacing and/or refilling thereof and for allowing using said water jet device (300) without said applicator (400).

8. The water jet device (300) according to claim 7 is a dental water jet device functioning as an improved oral irrigator device, allowing applying dental materials.

9. The water jet device (300) according to claim 7 further comprising a valve (340) installed at the jet tip to allow users to open and close the water jet therethrough.

10. The water jet device (300) according to claim 7, wherein said base member is a narrowing tube shape, where its inner wall enables walling said applicator (400) to form the cover in such a manner that creates a space (401) between said cannular member (411) and said wall into which the gel is forced through the plurality of openings (412), wherein once the water jet is applied through the applicator cavity when directed through the first rim towards the jet tip to exit the water jet device carry allotted portions of the gel inserted to the water jet from said space and into said cavity (416).

11. The water jet device (300) according to claim 7, wherein said outlet section (311) of said jet tip (310) is curved at the edge.

12. The water jet device (300) according to claim 7 further comprising a handle (330) designed for a user to grab on thereto when applying a water jet, said handle (330) comprises a valve mechanism (340) for enabling the respective user to control water flow while holding said handle (330).

13. The water jet device (300) according to claim 7, wherein said material is at least one of: medical material, cleansing material, cosmetic material.

14. The water jet device (300) according to claim 13, wherein said material is in the form of gel, paste, cream or powder.
